# EUROPÄISCHE PATENTSCHRIFT

(11) **EP 3 523 714 B1**
(45) Veröffentlichungstag und Bekanntmachung des Hinweises auf die Patenterteilung: **18.03.2026**
(21) Anmeldenummer: 16782205.5
(22) Anmeldetag: 10.10.2016
(51) Int. Cl.: G06F 3/0488, G06F 3/0484, G06F 3/04883

(54) **VERFAHREN ZUR ANPASSUNG DER DARSTELLUNG UND BEDIENUNG EINER GRAFISCHEN BENUTZERSCHNITTSTELLE**
METHOD FOR ADAPTING THE PRESENTATION AND USE OF A GRAPHICAL USER INTERFACE
PROCÉDÉ DE RÉGLAGE DE LA REPRÉSENTATION ET DE FONCTIONNEMENT D'UNE INTERFACE UTILISATEUR GRAPHIQUE

(43) Veröffentlichungstag der Anmeldung: 14.08.2019
(73) Patentinhaber: Volkswagen Aktiengesellschaft, 38440 Wolfsburg (DE)
(72) Erfinder: RHEDE, Johannes, 10115 Berlin (DE); TEMMING, Carsten, 38106 Braunschweig (DE); TÜMLER, Johannes, 39167 Wellen (DE)
(86) Internationale Anmeldenummer: PCT/EP2016/074239
(87) Internationale Veröffentlichungsnummer: WO 2018/068821

(56) Entgegenhaltungen:
- EP-A1- 2 955 614
- EP-A2- 1 959 337
- US-A1- 2013 047 119
- US-A1- 2013 147 849
- US-B2- 9 086 731
- ANONYMOUS: "Zooming user interface", 14 August 2008 (2008-08-14), Wikipedia, pages 1 - 4, XP055147654, Retrieved from the Internet <URL:http://en.wikipedia.org/w/index.php?title=Zooming_user_interface&oldid=231795919> [retrieved on 20141020]
- BEDERSON B ET AL: "IMPLEMENTING A ZOOMING USER INTERFACE: EXPERIENCE BUILDING PAD++", SOFTWARE PRACTICE & EXPERIENCE, WILEY & SONS, BOGNOR REGIS, GB, vol. 28, no. 10, 1 August 1998 (1998-08-01), pages 1101 - 1135, XP000768027, ISSN: 0038-0644, DOI: 10.1002/(SICI)1097-024X(199808)28:10<1101::AID-SPE190>3.0.CO;2-V

## Beschreibung

### Gebiet der Erfindung

Die vorliegende Erfindung betrifft ein Verfahren zur Anpassung der Darstellung und Bedienung einer grafischen Benutzerschnittstelle sowie eine grafische Benutzerschnittstelle, die zur Durchführung des Verfahrens eingerichtet ist.

### Hintergrund der Erfindung

Eine Interaktion mit Maschinen und Geräten erfordert die Verwendung von Benutzerschnittstellen (abgekürzt HMI von englisch "Human Machine Interface"), wobei grafische Benutzeroberflächen bzw. Benutzerschnittstellen (abgekürzt GUI von englisch "Graphical User Interface") mittlerweile weit verbreitet sind. Mit grafischen Benutzerschnittstellen lassen sich komplexe grafische Elemente auf einer Bildschirmoberfläche darstellen, auswählen und bedienen. Eine Bedienung kann durch eine Vielzahl verschiedener Eingabegeräte erfolgen. So wird beispielsweise im Bereich der Computertechnologie als Eingabegerät häufig eine Computermaus verwendet, bei Mobilfunkgeräten wie sogenannten Smartphones und bei sogenannten Tabletcomputern erfolgt eine Bedienung üblicherweise durch Berührung einer berührungsempfindlichen Displayoberfläche, einem sogenannten Touchscreen. Statt der Verwendung solcher Eingabegeräte können aber ebenso Eingabetechniken wie eine Bedienung durch eine Spracheingabe oder eine Gestensteuerung eingesetzt werden.

Für die Interaktion werden auf GUls häufig Bedienelemente in Form von Bildsymbolen, sogenannten Icons, dargestellt. Ebenso können als Bedienelemente Schaltflächen (Buttons), Symbol- bzw. Werkzeugleisten (Toolbars), Schieberegler, Auswahllisten oder auch Dialogfelder verwendet werden. Eines dieser Bedienelemente kann durch den Nutzer an- bzw. ausgewählt werden und steht dann für die nächste Eingabe im Fokus. Dieses kann für den Nutzer sichtbar gemacht werden, in dem das an- bzw. ausgewählte Bedienelement grafisch hervorgehoben wird, was insbesondere von Vorteil ist wenn mehrere an- bzw. auswählbare Bedienelemente angezeigt werden. Größere Bildsymbole mit höherem Detailgrad werden häufig auch als Kacheln bezeichnet, wobei diese üblicherweise rechteckig ausgestaltet sind und auf einer Arbeitsoberfläche oder einem sogenannten Home Screen mehrere Kacheln auf einer Kacheloberfläche angeordnet werden können. Icons und Kacheln sind üblicherweise mit Computeranwendungsprogrammen, kurz Anwendungen (englisch "Apps"), verknüpft, die durch Anwählen eines Icons bzw. einer Kachel gestartet und bedient werden können.

Weiterhin kann ein GUI skalierbar ausgestaltet sein, sodass einzelne Elemente oder auch die gesamte Oberfläche in unterschiedlichen Skalierungsgraden angezeigt werden können. Bei einer semantischen Skalierung werden hierbei einzelne Elemente abhängig zum Skalierungsgrad in unterschiedlichen Detailstufen dargestellt. Dies verschafft einerseits einen guten Gesamtüberblick, andererseits wird bei näherer Betrachtung ein Element detaillierter dargestellt, wobei zusätzliche Informationen eingeblendet werden. So ist aus der DE 10 2014 211 342 A1 eine Anwenderschnittstelle mit einem Kachel-basierten Menü auf einer Anzeigeeinheit einer Anwenderschnittstelle bekannt, bei der eine semantische Skalierung einer Kachel in der Weise erfolgt, dass diese zunächst mit einer ersten Vielzahl Schaltflächen angezeigt wird und ausgelöst durch einen Anwenderbefehl mit einer zweiten Vielzahl von Schaltflächen vergrößert dargestellt wird.

EP 2 955 614 A1 betrifft eine Anwenderschnittstelle sowie ein Verfahren zum Anpassen einer semantischen Skalierung einer Kachel auf einer Anzeigeeinheit einer Anwenderschnittstelle. Insbesondere eine anwenderfreundliche Darstellung von Funktionen sowie deren ergonomische Bedienung wird offenbart.

US 9 086 731 B2 offenbart durch aufeinander folgende Zoom-Gesten die Anzahl der angezeigten Icons in zwei Schritten zu verringern, so dass der Nutzer dann durch eine Tap-Geste eine Anwendung auswählen kann.

### Zusammenfassung der Erfindung

Es ist eine Aufgabe der Erfindung, die Interaktion mit einer grafischen Benutzerschnittstelle so zu gestalten, dass diese dem Nutzer ein im Vergleich zum Stand der Technik besseres Nutzererlebnis bietet.

Diese Aufgabe wird durch ein Verfahren mit den Merkmalen des Anspruchs 1 und eine grafische Benutzerschnittstelle gemäß Anspruch 10 gelöst. Bevorzugte Ausgestaltungen der Erfindung sind Gegenstand der abhängigen Ansprüche.

Das erfindungsgemäße Verfahren zur Anpassung der Darstellung und Bedienung einer grafischen Benutzerschnittstelle umfasst die folgenden Schritte. Zunächst wird in einem ersten Schritt eine Vielzahl von Bildsymbolen entsprechend einer Vielzahl von Anwendungen dargestellt, wobei ein Bildsymbol jeweils als Identifikator für eine Anwendung dient und die einzelnen Anwendungen in dieser Darstellung vom Nutzer nicht bedient werden können. In einem zweiten Schritt wird eine Nutzereingabe zur Auswahl eines Teils der durch die Bildsymbole identifizierten Anwendungen erfasst. Daraufhin werden in einem dritten Schritt vergrößerte Bildsymbole für die ausgewählten Anwendungen dargestellt, wobei keine umfassende Bedienfunktionalität der ausgewählten Anwendungen zur Verfügung steht aber bei mindestens einer Anwendung eine Bedienhandlung vorgenommen werden kann. In einem vierten Schritt wird eine weitere Nutzereingabe zur Auswahl von einem der durch die vergrößerten Bildsymbole identifizierten Anwendungen erfasst. Schließlich wird in einem fünften Schritt der Inhalt der ausgewählten Anwendung dargestellt, wobei auf eine umfassende Bedienfunktionalität der Anwendung zugegriffen werden kann.

Die erfindungsgemäße Interaktion mit der grafischen Benutzerschnittstelle verringert Fehlbedienungen und ermöglicht gleichzeitig eine komfortable und intuitive Bedienung. So nimmt in vielen Anwendungsgebieten die Anzahl der zu bedienende Anwendungen stetig zu, sodass bei einer möglichst vollständigen Darstellung dieser Anwendungen durch Bildsymbole wie Icons oder Kacheln die Darstellung der einzelnen Bildsymbole auf einem Bildschirm nur sehr klein möglich ist. Dieses kann dazu führen, dass der Nutzer auf die Schnelle nicht sicher eine spezielle Anwendung anwählen und bedienen kann. Deshalb erfolgt erfindungsgemäß zunächst eine Übersichtsdarstellung in der keine Funktion einer speziellen Anwendung direkt bedient werden kann, umso Fehlbedienungen zu vermeiden. Wird nun mittels einer Nutzereingabe ein Teil der durch die Bildsymbole identifizierten Anwendungen ausgewählt, so erfolgt eine vergrößerte Darstellung der Bildsymbole, wobei nun eine Bedienung einer Hauptfunktion oder weniger Hauptfunktionen für mindestens eine Anwendung möglich ist. Die wichtigsten Funktionen können damit durch den Nutzer bedient werden, ohne dass eine weitere Auswahl und Vergrößerung erforderlich ist. Wenn dann jedoch auf den vollen Funktionsumfang der Anwendung zugegriffen werden soll, kann diese durch eine weitere Nutzereingabe ausgewählt werden, sodass eine wiederum vergrößerte, nun bildschirmfüllende Darstellung dieser Anwendung mit umfassenden Informationen und einer Vielzahl von Bedienelementen erfolgt.

Gemäß einer Ausführungsform der Erfindung sind die Nutzereingabe zur Auswahl eines Teils der durch die Bildsymbole identifizierten Anwendungen und die weitere Nutzereingabe zur Auswahl von einem der durch die vergrößerten Bildsymbole identifizierten Anwendungen gleich.

Dieses hat den Vorteil, dass die Interaktion mit der grafischen Benutzerschnittstelle für den Nutzer besonders intuitiv ist. Damit wird die Akzeptanz des Nutzers für diese Menü-Interaktion gesteigert. Weiterhin erfordert dieses eine geringere Aufmerksamkeit des Nutzers bei der Bedienung, was beispielsweise bei einer Verwendung in einem Kraftfahrzeug von Vorteil ist, da so bei einer Bedienung durch den Fahrer die Ablenkung verringert und damit die Verkehrssicherheit erhöht wird.

Gemäß einer vorteilhaften Ausführungsform der Erfindung wird als Nutzereingabe für die Auswahl eine Bediengeste des Nutzers erfasst. Die Bediengeste kann hierbei durch die Hand bzw. einzelne Finger des Nutzers erfolgen.

Hierbei ist es besonders vorteilhaft, wenn ein Rückgängigmachen der Auswahl durch eine gegenteilige Bediengeste ausgelöst wird. Damit wird die Bedienung für den Nutzer noch intuitiver und somit einfacher.

Besonders vorteilhaft kann die Darstellung und Bedienung der grafischen Benutzerschnittstelle mittels einer berührungsempfindlichen Anzeigeoberfläche eines Displays erfolgen, da dann keine zusätzlichen Mittel zum Erfassen der Nutzereingabe erforderlich sind.

In diesem Fall kann als Bediengeste für die Auswahl das Auseinanderführen zweier Finger des Nutzers auf der berührungsempfindlichen Anzeigeoberfläche und entsprechend als Bediengeste für ein Rückgängigmachen der Auswahl das Zusammenführen zweier Finger des Nutzers erfasst werden.

Gemäß einer vorteilhaften Weiterbildung dieser Ausführungsform der Erfindung kann bei einer Darstellung der Bildsymbole und/oder vergrößerten Bildsymbole von nur einem Teil der Anwendungen die Darstellung durch eine Nutzereingabe so verschoben werden, dass Bildsymbole und/oder vergrößerten Bildsymbole von einem anderen Teil der Anwendungen dargestellt werden.

Hierbei ist es besonders vorteilhaft, wenn Einrastpositionen für die Darstellung der Bildsymbole und/oder vergrößerten Bildsymbole vorgesehen sind, so dass bei einer Verschiebung die Bildsymbole und/oder vergrößerten Bildsymbole an diesen Einrastpositionen ausgerichtet und vollständig dargestellt werden.

Gemäß einer Ausführungsform der Erfindung wird das erfindungsgemäße Verfahren durch eine grafische Benutzerschnittstelle mit einer Anzeigeeinheit und einer Eingabeeinheit, die zur Anpassung der Darstellung und Bedienung eingerichtet ist, durchgeführt.

Schließlich umfasst die Erfindung auch ein Kraftfahrzeug, das eingerichtet ist, das erfindungsgemäße Verfahren auszuführen oder eine erfindungsgemäße grafische Benutzerschnittstelle aufweist.

Weitere Merkmale der vorliegenden Erfindung werden aus der nachfolgenden Beschreibung und den Ansprüchen in Verbindung mit den Figuren ersichtlich.

### Kurze Beschreibung der Figuren

In den Figuren zeigen:
- Fig. 1: schematisch ein Flussdiagramm für ein Ausführungsbeispiel des erfindungsgemäßen Verfahrens;
- Fig. 2: schematisch den Übergang zwischen drei exemplarischen Darstellungsstufen mit unterschiedlichem Detailgrad;
- Fig. 3: schematisch die unterschiedliche Darstellung von mehreren Bildsymbolen auf einem Bildschirm vor und nach dem Verschieben dieser Bildsymbole.

### Detaillierte Beschreibung der Ausführungsformen

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

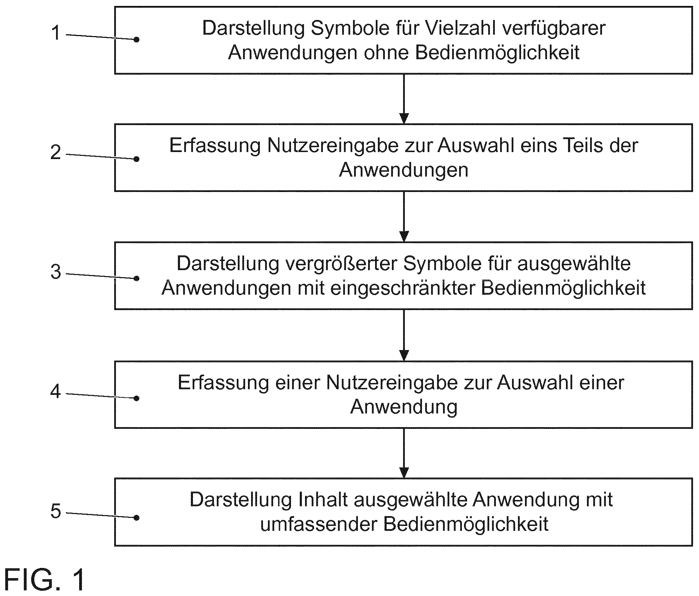

Figur 1 zeigt schematisch ein Ausführungsbeispiel für das erfindungsgemäße Verfahren zur Anpassung der Darstellung und Bedienung einer grafischen Benutzerschnittstelle.

Gemäß Verfahrensschritt 1 erfolgt zunächst eine Darstellung einer Vielzahl von Bildsymbolen, wie Icons, auf dem Bildschirm einer Anzeigevorrichtung. Den einzelnen Bildsymbolen ist hierbei jeweils eine Anwendung zugeordnet. Je nach Anzahl der vorhandenen Anwendungen und der Größe des Bildschirms können für alle Anwendungen oder auch nur für einen Teil der Anwendungen Bildsymbole dargestellt werden. Ebenso ist es möglich zusätzlich zu den bereits vorhandenen Anwendungen auch weitere Anwendungen, die beispielsweise in einer digitalen Vertriebsplattform für Anwendungssoftware, einem sogenannten App Store, verfügbar sind und von diesem geladen werden können, per Bildsymbol darzustellen. Hierfür kann es von Vorteil sein die Bildsymbole für einerseits bereits vorhandene Anwendungen und andererseits in einem App Store verfügbare Anwendungen unterschiedlich zu gestalten, sodass für den Nutzer ohne weiteres zu erkennen ist ob auf die Anwendung unmittelbar zugegriffen werden kann oder nicht. Eine direkte Bedienung der einzelnen Anwendungen ist in dieser Darstellung nicht möglich. Gegebenenfalls kann aber vorgesehen sein, dass in dieser Darstellung bereits ein Aufschalten bzw. Starten einer Anwendung möglich ist.

Im Verfahrensschritt 2 wird nun eine erste Eingabe eines Nutzers erfasst, mit der ein Teil der durch die Bildsymbole identifizierten ursprünglich vorhandenen bzw. verfügbaren Anwendungen ausgewählt wird.

Gemäß Verfahrensschritt 3 erfolgt daraufhin eine Anzeige von vergrößerten Bildsymbolen für die ausgewählten Anwendungen. In dieser Zwischenstufe werden weiterhin Bildsymbole, beispielsweise in Form von Kacheln, für mehrere Anwendungen dargestellt, wobei die Bildsymbole nicht nur als Identifikator der jeweiligen Anwendung dienen sondern auch bereits die wichtigsten Informationen und den aktuellen Status der Anwendung wiedergeben. Auch hier steht noch keine umfassende Bedienfunktionalität der ausgewählten Anwendungen zur Verfügung, es kann aber bei mindestens einer Anwendung eine direkte Bedienhandlung von einem oder mehreren Hauptfunktionen vorgenommen werden. So kann beispielsweise bei einer Telefonie-Anwendung die Annahme eines Anrufs oder das Beenden eines Anrufs möglich sein.

Um den vollständigen Inhalt einer Anwendung anzuzeigen und die volle Funktionalität der Anwendung zur Verfügung zu haben, wird im darauf folgenden Verfahrensschritt 4 eine weitere Eingabe des Nutzers erfasst, mit der dieser eine der durch die vergrößerten Bildsymbole identifizierten Anwendungen auswählt.

Die ausgewählte Anwendung wird dann im Verfahrensschritt 5 geöffnet und der Inhalt der Anwendung angezeigt. Es kann nun auf die vollständige Funktionalität der Anwendung zugegriffen werden.

In dem oben beschriebenen Ausführungsbeispiel des erfindungsgemäßen Verfahrens erfolgt zwischen der Übersichtsanzeige mit minimalem Detailgrad der verschiedenen Anwendungen und der Anzeige mit maximalem Detailgrad für eine ausgewählte Anwendung eine einzelne dazwischen liegende Anzeige. Ebenso ist es aber auch denkbar, dass mehrere dazwischen liegende Anzeigen mit unterschiedlicher Anzahl und Größe der Bildsymbole und unterschiedlichem Detailgrad durch den Nutzer angewählt und dargestellt werden können.

Ebenso kann gemäß der Erfindung eine Veränderung des Detailgrads in der Gegenrichtung erfolgen, d.h. startend von einer vollständigen Anzeige für eine einzelne Anwendung mit vollständiger Funktionalität der Anwendung über ein oder mehrere Zwischenstufen bis zu einer Übersichtsanzeige der verschiedenen Anwendungen ohne direkte Bedienmöglichkeit der einzelnen Anwendungen.

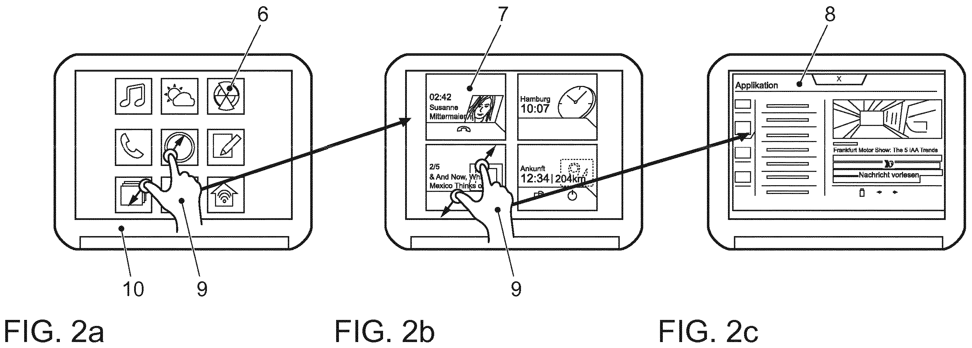

Figur 2 zeigt schematisch für eine Anwendung der Erfindung in einem Kraftfahrzeug eine Anzeige auf einem Bildschirm 10 in drei Darstellungsstufen mit unterschiedlichem Detailgrad sowie den Übergang zwischen diesen Darstellungsstufen. Der Bildschirm 10 kann beispielsweise in der Mittelkonsole angeordnet sein und ist als Touchscreen-Display ausgestaltet, sodass eine Berührung der Displayoberfläche mit einem Finger oder mehreren Fingern der Hand 9 des Nutzers eine Bedienung bzw. Steuerung der Anwendungen ermöglicht. In Teilfigur 2a wird eine Übersicht der vorhandenen, gegebenenfalls auch weiterer verfügbarer Anwendungen, symbolisiert durch die Icons 6, dargestellt. Exemplarisch sind hier neun Icons für neun verschiedene Anwendungen gezeigt.

Die Icons 6 bzw. durch sie symbolisierten Anwendungen betreffen hierbei verschiedene Funktionen bzw. Themenbereiche. So können die Anwendungen beispielsweise zur Audiowiedergabe, Wettervorhersage, Telefonie, Klimatisierung oder Navigation dienen oder auch fahrzeugrelevante Information wiedergeben. Die Anzeige der Icons 6 in der Übersichtsansicht kann fest konfiguriert sein, es können aber, insbesondere bei einer größeren Anzahl von Anwendungen, auch vom Nutzer Icons für die für ihn wichtigsten Anwendungen ausgewählt und gegebenenfalls an beliebiger Stelle auf dem Bildschirm 10 positioniert werden.

Berührt nun der Nutzer mit zwei Fingern, vorzugsweise Daumen und Zeigefinger, seiner Hand 9 die berührungsempfindliche Oberfläche des Touchscreens und zieht die beiden Finger auseinander (sogenannte Unpinch-Geste), so erfolgt für die in dem Bereich der Finger durch die Icons 6 symbolisierten Anwendungen eine Darstellung von vergrößerten Bildsymbolen 7, wie in Teilfigur 2b gezeigt. Exemplarisch werden hier nun bildschirmfüllend vier größere Icons bzw. Kacheln für vier Anwendungen wiedergegeben. Die Darstellungen weisen nun einen erhöhten Detailgrad auf, so wird beispielsweise für eine Telefonie-Anwendung die bisherige Gesprächsdauer und der Name des Gesprächspartners zusammen mit einem Bild des Gesprächspartners angegeben. Weiterhin ist ein Bedienelement zum Beenden des Anrufs angezeigt, das in dieser Darstellung vom Nutzer direkt bedient werden kann.

Durch erneutes Auseinanderziehen der beiden Finger im Bereich von einem der vergrößerten Bildsymbole wird nun für die damit verknüpfte Anwendung der vollständige Informationsinhalt 8 angezeigt, wie in Teilfigur 2c gezeigt. Die Bedienung ist jetzt nicht länger auf wenige Hauptfunktionen beschränkt, sondern umfasst den vollen Funktionsumfang.

Um die vergrößerte Darstellung wieder rückgängig machen zu können und die Darstellungen mit verschiedenen Detailgrad in der Gegenrichtung durchlaufen zu können, wird vorzugsweise die gegenteilige Geste vom Nutzer ausgeführt und erfasst, das heißt der Nutzer führt hierfür die Finger wieder zusammen (sogenannte Pinch-Geste).

Bei einer größeren Anzahl von Anwendungen können in den Zwischenstufen gegebenenfalls nicht alle Bildsymbole der verfügbaren Anwendungen angezeigt werden. In diesem Fall kann eine Verschiebung der Anzeige durch den Nutzer erfolgen. So können durch eine Wischbewegung mit einem oder mehreren Fingern die angezeigten Bildsymbole in horizontaler, vertikaler oder auch in anderen Bewegungsrichtung verschoben werden.

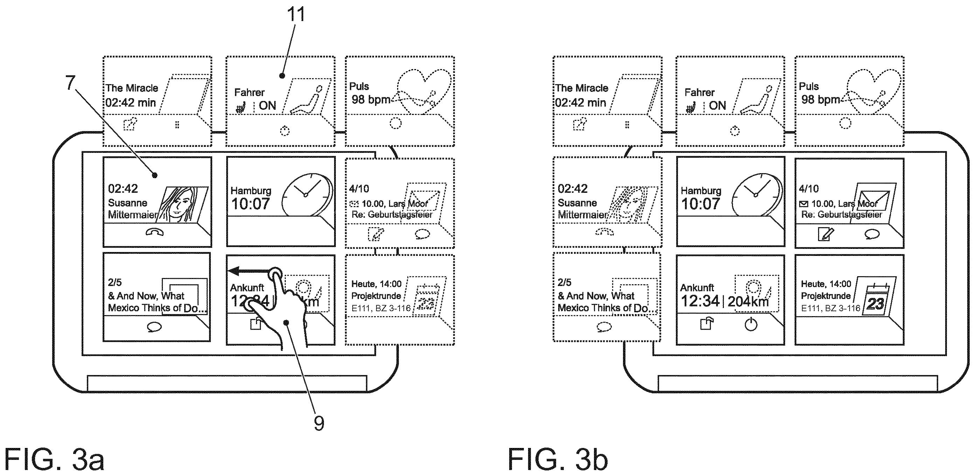

Exemplarisch ist dieses in Figur 3 für neun größere Bildsymbole, die neun verschiedenen Anwendungen zugeordnet sind, dargestellt. Die rechteckigen Bildsymbole sind hierbei in einem 3 × 3 Raster angeordnet. Aufgrund der vergrößerten Darstellung der Bildsymbole können nur vier von ihnen auf dem Bildschirm dargestellt werden, weitere Icons bzw. Kacheln 11 liegen außerhalb des Darstellungsbereichs des Bildschirms und sind damit nicht sichtbar. In Teilfigur 2a werden zunächst die links und mittig in der mittleren und unteren Reihe angeordneten Bildsymbole angezeigt und gegebenenfalls vom Nutzer bedient. Um nun die in der mittleren und unteren Reihe rechts daneben liegenden Bildsymbole anzuzeigen und bedienen zu können, führt der Nutzer mit seinem Zeigefinger eine Wischbewegung nach links aus. Nachdem diese Wischbewegung erfasst und ausgewertet worden ist, wird die Darstellung so angepasst dass nun die gewünschten Bildsymbole angezeigt werden.

Aufgrund der begrenzten Größe des Bildschirms und um die Anzeige ansprechender zu gestalten, werden hierbei Einrastpositionen für die Bildsymbole verwendet um keine unvollständige Darstellung der Bildsymbole anzuzeigen. Die Verschiebung der Bildsymbole erfolgt somit nicht unmittelbar proportional zur Wischbewegung sondern in diskreten Schritten, d.h., wenn die vom Finger auf der Oberfläche des Bildschirms zurückgelegte Strecke eine bestimmte Länge erreicht hat werden alle Bildsymbole in einem auf dem Bildschirm nicht wiedergegebenen Raster in Richtung der Wischbewegung um eine Position verschoben dargestellt.

Die Verschiebung der Bildsymbole durch eine Wischbewegung zu initiieren ist insbesondere dann von Vorteil, wenn auch die Veränderung des Detailgrads durch eine Fingergeste gesteuert wird, da dann ein einheitliches und für den Nutzer leicht verständliches Bedienkonzept vorliegt.

Statt die Nutzereingaben über einen Touchscreen vorzunehmen, können diese auch auf andere Weise erfasst werden. So können beispielsweise entsprechende Gesten vom Nutzer im Raum vor dem Bildschirm vorgenommen werden und durch einen geeigneten Gestensensor detektiert werden. Der Gestensensor kann beispielsweise mittels einer Kamera die Position der Hand bzw. Finger des Nutzers detektieren, wobei eine Beleuchtung mit Infrarotlicht erfolgen kann.

Die Erfindung kann vorteilhaft im Bereich der Fahrzeugtechnik eingesetzt werden, ist aber keineswegs darauf beschränkt. Vielmehr kann die Erfindung in beliebigen computerbasierten Systemen, die eine grafische Benutzerschnittstelle mit einer Menüstruktur für mehrere Anwendungen aufweisen, verwendet werden.

### Bezugszeichenliste

- 1: Verfahrensschritt mit Darstellung von Bildsymbolen für eine Vielzahl verfügbarer Anwendungen ohne Bedienmöglichkeit
- 2: Verfahrensschritt mit Erfassung einer Nutzereingabe zur Auswahl eines Teils derAnwendungen
- 3: Verfahrensschritt mit Darstellung vergrößerter Bildsymbole für ausgewählte Anwendungen mit eingeschränkter Bedienmöglichkeit
- 4: Verfahrensschritt mit Erfassung einer Nutzereingabe zur Auswahl einer einzelnen Anwendung
- 5: Verfahrensschritt mit Darstellung des Inhalts einer ausgewählten Anwendung mit umfassender Bedienmöglichkeit
- 6: Icon
- 7: Kachel
- 8: Vollbildanzeige für eine Anwendung
- 9: Hand des Nutzers
- 10: Bildschirm
- 11: nicht auf dem Bildschirm dargestellte Kachel

## Patentansprüche

1. Verfahren zur Anpassung einer grafischen Benutzerschnittstelle, wobei sowohl die Darstellung als auch die Bedienung angepasst wird und das Verfahren die folgenden Schritte umfasst:
- Darstellen (1) einer Übersicht vorhandener Anwendungen mittels einer Vielzahl von Bildsymbolen (6) mit minimalem Detailgrad, wobei jeweils ein Bildsymbol (6) als Identifikator für eine der vorhandenen Anwendungen dient und die einzelnen Anwendungen in der dargestellten Übersicht vom Nutzer jeweils nicht bedient werden können,
- Erfassen (2) einer Nutzereingabe zur Auswahl eines Teils der durch die Bildsymbole identifizierten Anwendungen,
- Darstellen (3) von vergrößerten Bildsymbolen (7) mit einem erhöhten Detailgrad für die ausgewählten Anwendungen, wobei in dieser Darstellung der vergrößerten Bildsymbole keine umfassende Bedienfunktionalität der ausgewählten Anwendungen zur Verfügung steht aber eine Bedienhandlung einer Hauptfunktion oder weniger Hauptfunktionen vorgenommen werden kann,
- Erfassen (4) einer weiteren Nutzereingabe zur Auswahl von einem der durch die vergrößerten Bildsymbole identifizierten Anwendungen, und
- Bildschirmfüllendes Darstellen (5) des Inhalts (8) der ausgewählten Anwendung mit maximalem Detailgrad, wobei in dieser bildschirmfüllenden Darstellung auf eine umfassende Bedienfunktionalität der ausgewählten Anwendung zugegriffen werden kann.

2. Verfahren nach Anspruch 1, wobei die Nutzereingabe zur Auswahl eines Teils der durch die Bildsymbole (6) identifizierten Anwendungen und die weitere Nutzereingabe zur Auswahl von einem der durch die vergrößerten Bildsymbole (7) identifizierten Anwendungen gleich sind.

3. Verfahren nach Anspruch 2, wobei als Nutzereingabe für die Auswahl eine Bediengeste des Nutzers erfasst wird.

4. Verfahren nach Anspruch 3, wobei ein Rückgängigmachen der Auswahl durch eine gegenteilige Bediengeste ausgelöst wird.

5. Verfahren nach Anspruch 3 oder 4, wobei die Darstellung und Bedienung der grafischen Benutzerschnittstelle mittels einer berührungsempfindlichen Anzeigeoberfläche (10) eines Displays erfolgt.

6. Verfahren nach Anspruch 5, wobei als Bediengeste für die Auswahl das Auseinanderführen zweier Finger des Nutzers auf der berührungsempfindlichen Anzeigeoberfläche (10) erfasst wird.

7. Verfahren nach Anspruch 5 oder 6, wobei als Bediengeste für ein Rückgängigmachen der Auswahl das Zusammenführen zweier Finger des Nutzers auf der berührungsempfindlichen Anzeigeoberfläche erfasst wird.

8. Verfahren nach einem der vorhergehenden Ansprüche, wobei bei einer Darstellung der Bildsymbole (6) und/oder vergrößerten Bildsymbole (7) von nur einem Teil der Anwendungen die Darstellung durch eine Nutzereingabe so verschoben werden kann, dass Bildsymbole und/oder vergrößerten Bildsymbole von einem anderen Teil der Anwendungen dargestellt werden.

9. Verfahren nach Anspruch 8, wobei Einrastpositionen für die Darstellung der Bildsymbole (6) und/oder vergrößerten Bildsymbole (7) vorgesehen sind, so dass bei einer Verschiebung die Bildsymbole und/oder vergrößerten Bildsymbole an diesen Einrastpositionen ausgerichtet und vollständig dargestellt werden.

10. Grafische Benutzerschnittstelle mit einer Anzeigeeinheit und einer Eingabeeinheit, die zur Anpassung der Darstellung und Bedienung eingerichtet ist ein Verfahren nach einem der vorhergehenden Ansprüche durchzuführen.

11. Kraftfahrzeug, **dadurch gekennzeichnet, dass** es eingerichtet ist, ein Verfahren gemäß einem der Ansprüche 1 bis 9 auszuführen oder eine grafische Benutzerschnittstelle gemäß Anspruch 10 aufweist.

## Claims

1. Method for adapting a graphical user interface, wherein both the display and the operation are adapted and the method comprises the following steps:
- displaying (1) an overview of existing applications by means of a plurality of image icons (6) with a minimum level of detail, wherein each image icon (6) serves as an identifier for one of the existing applications and the individual applications in the displayed overview cannot be operated by the user in each case,
- detecting (2) a user input for selecting a subset of the applications identified by the image icons,
- displaying (3) enlarged image icons (7) with an increased level of detail for the selected applications, wherein, in this display of the enlarged image icons, comprehensive operating functionality of the selected applications is not available, but an operating action of one main function or a few main functions can be performed,
- detecting (4) further a user input for selecting one of the applications identified by the enlarged image icons, and
- displaying (5) the content (8) of the selected application in a full-screen manner with maximum level of detail, wherein, in this full-screen display, a comprehensive operating functionality of the selected application can be accessed.

2. Method according to claim 1, wherein the user input for selecting a subset of the applications identified by the image icons (6) and the further user input for selecting one of the applications identified by the enlarged image icons (7) are the same.

3. Method according to claim 2, wherein a user operating gesture is detected as user input for the selection.

4. Method according to claim 3, wherein a reversal of the selection is triggered by an opposite operating gesture.

5. Method according to claim 3 or 4, wherein the graphical user interface is displayed and operated by means of a touch-sensitive display surface (10) of a display.

6. Method according to claim 5, wherein the separation of two fingers of the user on the touch-sensitive display surface (10) is detected as the operating gesture for selection.

7. Method according to claim 5 or 6, wherein the bringing together of two fingers of the user on the touch-sensitive display surface is detected as the operating gesture for undoing the selection.

8. Method according to any of the preceding claims, wherein, when the image icons (6) and/or enlarged image icons (7) of only one subset of the applications are displayed, the display can be shifted by a user input, such that image icons and/or enlarged image icons of another subset of the applications are displayed.

9. Method according to claim 8, wherein snap-in positions are provided for the display of the image icons (6) and/or enlarged image icons (7), such that, upon being shifted, the image icons and/or enlarged image icons are aligned and fully displayed at these snap-in positions.

10. Graphical user interface comprising a display unit and an input unit configured to carry out a method according to any of the preceding claims for adapting the display and operation.

11. Motor vehicle, **characterized in that** it is configured to carry out a method according to any of claims 1 to 9, or has a graphical user interface according to claim 10.

## Revendications

1. Procédé pour l'adaptation d'une interface utilisateur graphique, dans lequel à la fois la représentation et la manipulation sont adaptées et le procédé comprend les étapes suivantes :
- représentation (1) d'un aperçu d'applications existantes au moyen d'une pluralité d'icônes (6) avec un degré de détail minimal, dans lequel respectivement une icône (6) sert d'identificateur pour l'une des applications existantes et les différentes applications ne peuvent respectivement pas être manipulées par l'utilisateur dans l'aperçu représenté,
- détection (2) d'une entrée utilisateur pour la sélection d'une partie des applications identifiées par les icônes,
- représentation (3) d'icônes agrandies (7) avec un degré de détail accru pour les applications sélectionnées, dans lequel, dans ladite représentation des icônes agrandies, aucune fonctionnalité de manipulation complète des applications sélectionnées n'est disponible mais une action de manipulation d'une fonction principale ou de quelques fonctions principales peut être réalisée,
- détection (4) d'une autre entrée utilisateur pour la sélection de l'une des applications identifiées par les icônes agrandies, et
- représentation plein écran (5) du contenu (8) de l'application sélectionnée avec un degré de détail maximal, dans lequel, dans ladite représentation plein écran, il est possible d'accéder à une fonctionnalité de manipulation complète de l'application sélectionnée.

2. Procédé selon la revendication 1, dans lequel l'entrée d'utilisateur pour la sélection d'une partie des applications identifiées par les icônes (6) et l'autre entrée utilisateur pour la sélection l'une des applications identifiées par les icônes agrandies (7) sont identiques.

3. Procédé selon la revendication 2, dans lequel un geste de manipulation de l'utilisateur est détecté comme entrée utilisateur pour la sélection.

4. Procédé selon la revendication 3, dans lequel une annulation de la sélection est déclenchée par un geste de manipulation opposé.

5. Procédé selon la revendication 3 ou 4, dans lequel la représentation et la manipulation de l'interface utilisateur graphique sont effectuées au moyen d'une surface d'affichage sensible au toucher (10) d'un écran.

6. Procédé selon la revendication 5, dans lequel est détecté comme geste de manipulation pour la sélection l'écartement de deux doigts de l'utilisateur sur la surface d'affichage sensible au toucher (10).

7. Procédé selon la revendication 5 ou 6, dans lequel est détectée comme geste de manipulation pour une annulation de la sélection la réunion de deux doigts de l'utilisateur sur la surface d'affichage sensible au toucher.

8. Procédé selon l'une des revendications précédentes, dans lequel, lors d'une représentation des icônes (6) et/ou des icônes agrandies (7) par seulement une partie des applications, la représentation peut être déplacée par une entrée utilisateur de sorte que les icônes et/ou les icônes agrandies sont représentées par une autre partie des applications.

9. Procédé selon la revendication 8, dans lequel des positions de verrouillage sont prévues pour la représentation des icônes (6) et/ou des icônes agrandies (7), de sorte que, lors d'un déplacement, les icônes et/ou les icônes agrandies sont alignées sur lesdites positions de verrouillage et représentées intégralement.

10. Interface utilisateur graphique comportant une unité d'affichage et une unité d'entrée, qui est configurée pour exécuter un procédé selon l'une des revendications précédentes pour l'adaptation de la représentation et de la manipulation.

11. Véhicule automobile, **caractérisé en ce qu'**il est configuré pour mettre en œuvre un procédé selon l'une des revendications 1 à 9 ou présente une interface utilisateur graphique selon la revendication 10.
